# EUROPEAN PATENT APPLICATION

(11) **EP 4 727 198 A1**
(43) Date of publication of application: **15.04.2026**
(21) Application number: 24826110.9
(22) Date of filing: 26.04.2024
(51) Int. Cl.: H04W 24/02, H04W 24/04, H04W 76/15, H04L 5/00, H04L 41/0895, H04W 88/08, H04W 88/12, H04W 92/04, H04W 92/12

(54) **APPARATUS AND METHOD FOR PROVIDING CONNECTION STATE OF INTERFACE**

(30) Priority: 21.06.2023 KR 20230079966; 05.10.2023 KR 20230132920
(71) Applicant: Samsung Electronics Co., Ltd., Suwon-si, Gyeonggi-do 16677 (KR)
(72) Inventor: SONG, Junhyuk, Suwon-si, Gyeonggi-do 16677 (KR); KANG, Seungwon, Suwon-si, Gyeonggi-do 16677 (KR); KHO, Youngsung, Suwon-si, Gyeonggi-do 16677 (KR); KIM, Chulmin, Suwon-si, Gyeonggi-do 16677 (KR); LEE, Chungkeun, Suwon-si, Gyeonggi-do 16677 (KR)
(74) Representative: Gulde & Partner
(86) International application number: PCT/KR2024/005718
(87) International publication number: WO 2024/262787

(57) **Abstract**

An apparatus for an E2 node may comprise: at least one processor; and a memory including instructions. The instructions, when executed individually or collectively by the at least one processor, may cause the E2 node to transmit an E2 node configuration update message to a near-real time (near-RT) radio access network intelligence controller (RIC). The instructions, when executed individually or collectively by the at least one processor, may cause the E2 node to receive, from the near-RT RIC, an E2 node configuration update acknowledge message in response to the E2 node configuration update message. The E2 node configuration update message may include information indicating that an interface connection between the E2 node and a node is disconnected.

## Description

### [Technical Field]

The following descriptions relate to an apparatus and a method for providing a connection status of an interface.

### [Background Art]

In order to meet the increasing demand for wireless data traffic after the commercialization of 4G (4^{th} generation) communication systems, efforts have been made to develop improved 5G (5^{th} generation) communication systems or pre-5G communication systems. For this reason, 5G communication systems or pre-5G communication systems are referred to as Beyond 4G Network communication systems or Post Long Term Evolution (LTE) systems.

To achieve high data transmission rates, the implementation of 5G communication systems in a millimeter wave (mmWave) band (e.g., 60 GHz band) is being considered. In order to mitigate a path loss of radio waves in the millimeter wave band and extend a propagation distance of the radio waves, beamforming, massive MIMO, Full Dimensional MIMO (FD-MIMO), array antenna, analog beam-forming, and large scale antenna technologies are being discussed in the 5G communication system.

In addition, in order to enhance network performance, technologies such as evolved small cells, advanced small cells, cloud radio access network (cloud RAN), ultra-dense network, device to device communication (D2D), wireless backhaul, moving network, cooperative communication, coordinated multi-points (CoMP), and interference cancellation are being developed in 5G communication systems.

In addition, advanced coding modulation (ACM) techniques such as hybrid frequency shift keying and quadrature amplitude modulation (FQAM) and sliding window superposition coding (SWSC) and advanced access technologies such as filter bank multi-carrier (FBMC), non-orthogonal multiple access (NOMA), and sparse code multiple access (SCMA) are being developed in the 5G systems.

With the commercialization of 5G systems and new radio or next radio (NR) to meet the demand for wireless data traffic, high-data-rate services are being provided to users through 5G systems, similar to 4G, and various wireless communication services, including Internet of Things (IoT) and services requiring high reliability for specific purposes, are expected to be provided. In a current system where the fourth-generation communication system and the fifth-generation communication system are mixed, open radio access network (O-RAN) established by operators and equipment providers defines E2 application protocol (E2AP) standard in an application protocol of E2 interface between an E2 node and a near-real-time (Near-RT) radio access network (RAN) intelligent controller (RIC).

Looking back at the development process of wireless communication generations, technologies have been developed mainly for services targeting humans, such as voice, multimedia, and data. After the commercialization of the 5^{th} Generation (5G) communication system, it is expected that the number of connected devices will increase explosively and be connected to communication networks. Examples of objects connected to the network include vehicles, robots, drones, home appliances, displays, smart sensors installed in various infrastructures, construction machinery, and factory equipment. Mobile devices are expected to evolve into various form factors, such as augmented reality glasses, virtual reality headsets, and holographic devices. In the 6^{th} Generation (6G) era, efforts are being made to develop an improved 6G communication system to connect hundreds of billions of devices and objects and provide various services. For this reason, the 6G communication system is referred to as a system beyond 5G.

In the 6^{th} Generation (6G) communication system, which is predicted to be realized around 2030, a maximum transmission speed is tera (i.e., 1,000 giga) bit per second (bps), and the wireless latency is 100 microseconds (µsec). That is, compared to the 5G communication system, a transmission speed in the 6G communication system is 50 times faster, and the wireless latency is reduced to one-tenth.

To achieve such high data transmission speed and ultra-low latency, the 6G communication system is being considered for implementation in a Terahertz (THz) band (e.g., such 95 Gigahertz (GHz) to 3 THz). The Terahertz band is expected to place greater importance on technologies that ensure signal reach distance, that is, coverage, due to more serious path loss and atmospheric absorption phenomena compared to the millimeter-wave (mmWave) band introduced in 5G. As key technologies to ensure coverage, multiple antenna transmission technologies such as radio frequency (RF) components, antennas, a new waveform superior to orthogonal frequency division multiplexing (OFDM) in terms of coverage, beamforming, massive multiple-input and multiple-output (massive MIMO), full dimensional MIMO (FD-MIMO), array antenna, and large-scale antenna need to be developed. In addition, to improve a coverage of terahertz band signals, new technologies such as metamaterial-based lenses and antennas, high-dimensional spatial multiplexing technology using orbital angular momentum (OAM), and reconfigurable intelligent surface (RIS) are being discussed.

In order to improve frequency efficiency and enhance the system network, the 6G communication system is developing technologies such as a full duplex technology, which enables the uplink and downlink to utilize simultaneously the same frequency resources, a network technology that integrally utilizes satellites and high-altitude platform stations (HAPS), a network structure innovation technology that supports mobile base stations and enables network operation optimization and automation, a dynamic spectrum sharing technology through collision avoidance based on spectrum usage prediction, an artificial intelligence (AI)-based communication technology that realizes system optimization by internalizing an end-to-end AI support function and utilizing AI from a design stage, and a next-generation distributed computing technology that realizes services with complexities that exceed limits of terminal computing capabilities by utilizing ultra-high-performance communication and computing resources (e.g., Mobile Edge Computing (MEC), cloud, and the like). In addition, efforts are continuously being made to strengthen connectivity between devices, further optimize the network, promote the softwareization of network entities, and increase the openness of wireless communication through the design of new protocols to be used in the 6G communication system, the implementation of hardware-based security environments, the development of mechanisms for the safe utilization of data, and the development of technologies for maintaining privacy.

Due to the research and development of the 6G communication system, it is expected that the next hyper-connected experience will become possible through the hyper-connectivity of the 6G communication system, which includes not only interconnection between objects but also connections between humans and objects. Specifically, the 6G communication system is expected to enable the provision of services such as truly immersive eXtended Reality (XR), high-fidelity mobile hologram, and digital replica. In addition, services such as remote surgery, industrial automation, and emergency response will be provided through the 6G communication system with enhanced security and reliability, which will be applied in various fields such as industry, healthcare, automotive, and home appliances.

In order to meet a demand for wireless data traffic, a 5G system, new radio (NR) (or next radio), has been commercialized, so that a service having a high data transmission rate may be provided to a user through the 5G system similarly to 4G, and wireless communication services having various objectives such as an Internet of Things and a service requiring high reliability for a specific purpose may be expected to be provided. In a system in which a current fourth generation communication system and a fifth generation system are mixed, open radio access network (O-RAN) established by operators and equipment providers defines E2 application protocol (E2AP) specification in an application protocol of an E2 interface between an E2 node and near-real time radio access network intelligence controller (Near-RT RIC).

### [Disclosure]

### [Technical Solution]

An apparatus of an E2 node may comprise at least one processor. The apparatus may comprise memory including instructions. The instructions, when executed by the at least one processor, may cause the E2 node to transmit, to a near-real time radio access network intelligence controller (Near-RT RIC), an E2 node configuration update message. The instructions, when executed by the at least one processor, may cause the E2 node to receive, from the Near-RT RIC, an E2 node configuration update acknowledge message in response to the E2 node configuration update message. The E2 node configuration update message may include information indicating that an interface connection between the E2 node and a node is disconnected.

An apparatus of a near-real time radio access network intelligence controller (Near-RT RIC) may comprise at least one processor. The apparatus may comprise memory including instructions. The instructions, when executed by the at least one processor, may cause the Near-RT RIC to receive, from an E2 node, an E2 node configuration update message. The instructions, when executed by the at least one processor, may cause the Near-RT RIC to transmit, to the E2 node, an E2 node configuration update acknowledge message, in response to the E2 node configuration update message. The E2 node configuration update message may include information indicating that an interface connection between the E2 node and a node is disconnected.

A method performed by an apparatus of an E2 node may comprise transmitting, to a near-real time radio access network intelligence controller (Near-RT RIC), an E2 node configuration update message. The method may comprise receiving, from the Near-RT RIC, an E2 node configuration update acknowledge message, in response to the E2 node configuration update message. The E2 node configuration update message may include information indicating that an interface connection between the E2 node and a node is disconnected.

A non-transitory computer-readable storage medium, when individually or collectively executed by a processor of an apparatus of an E2 node, may store one or more programs including instructions that cause to transmit, to a near-real time radio access network intelligence controller (Near-RT RIC), an E2 node configuration update message. The non-transitory computer-readable storage medium, when individually or collectively executed by the processor, may store one or more programs including instructions that cause to receive, from the Near-RT RIC, an E2 node configuration update acknowledge message, in response to the E2 node configuration update message. The E2 node configuration update message may include information indicating that an interface connection between the E2 node and a node is disconnected.

A method performed by an apparatus of a near-real time radio access network intelligence controller (Near-RT RIC) may comprise receiving, from an E2 node, an E2 node configuration update message. The method may comprise transmitting, to the E2 node, an E2 node configuration update acknowledge message, in response to the E2 node configuration update message. The E2 node configuration update message may include information indicating that an interface connection between the E2 node and a node is disconnected.

A non-transitory computer-readable storage medium, when individually or collectively executed by at least one processor of an apparatus of a near-real time radio access network intelligence controller (Near-RT RIC), may store one or more programs including instructions that cause the Near-RT RIC to receive, from an E2 node, an E2 node configuration update message. The non-transitory computer-readable storage medium, when individually or collectively executed by the at least one processor, may store one or more programs including instructions that cause the Near-RT RIC to transmit, to the E2 node, an E2 node configuration update acknowledge message, in response to the E2 node configuration update message. The E2 node configuration update message may include information indicating that an interface connection between the E2 node and a node is disconnected.

### [Description of the Drawings]

FIG. 1 illustrates an example of a 4^{th} generation (4G) Long Term Evolution (LTE) core system.
FIG. 2A illustrates an example of a 5 ^{th} generation (5G) non-standard alone (NSA) system.
FIG. 2B illustrates an example of an architecture for O-RAN.
FIG. 3 illustrates an example of a protocol stack of an E2 application protocol message in a wireless access network.
FIG. 4 illustrates an example of a connection between a base station and a radio access network intelligence controller (RIC) in a wireless access network.
FIG. 5 illustrates an example of a configuration of a device in a wireless access network.
FIG. 6 illustrates an example of a logical function related to an E2 message of an E2 node and an RIC in a wireless access network.
FIG. 7 illustrates examples of a function split between an E2 node and a RIC.
FIG. 8 illustrates an implementation example of an E2 node and a RIC.
FIG. 9 illustrates an example of a function split between a centralized unit (CU) and a RIC.
FIG. 10A and FIG. 10B illustrate an example of an E2 node configuration update procedure.
FIG. 11 illustrates an example of signaling between an E2 node and a near-real time radio access network intelligence controller (Near-RT RIC).
FIG. 12 illustrates an example of an operation flow for recognizing whether an interface is activated based on information indicating a connection status of an interface provided from a Near-RT RIC to an E2 node.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

The terms referring to a signal (e.g., packet, message, signal, information, signaling), terms referring to a resource (e.g., section, symbol, slot, subframe, radio frame, subcarrier, resource element (RE), resource block (RB), bandwidth part (BWP), occasion), terms referring to an operation state (e.g., step, operation, procedure), terms referring to data (e.g., packet, message, user stream, information, bit, symbol, codeword), terms referring to a channel, terms referring to a network entity (e.g., distributed unit (DU), radio unit (RU), central unit (CU), CU-control plane (CP), CU-user plane (UP), open radio access network (O-RAN) DU (O-DU), O-RAN RU (O-RU), O-RAN CU (O-CU), O-RAN CU-CP (O-CU-UP), O-RAN CU-CP (O-CU-CP)), terms referring to a device component, and the like, which are used in the following description are exemplified for convenience of explanation. Therefore, the present disclosure is not limited to terms to be described below, and another term having an equivalent technical meaning may be used. In addition, a term such as '...unit, '...device, '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, unless explicitly stated otherwise, 'A' to 'B' refers to at least one of elements from A (including A) to B (including B). Hereinafter, 'C' and/or 'D' means including at least one of 'C' or 'D', that is, {'C', 'D', and 'C' and 'D'}.

Hereinafter, the present disclosure relates to a control procedure between a device in a RAN (radio access network) and a device controlling the RAN in a wireless communication system. Specifically, the present disclosure relates to a procedure, a message, and a method for performing control based on recognizing whether an interface is activated by a RAN intelligent controller (RIC) by an E2 node providing a connection status of an interface connected to the E2 node to the RIC on an E2 interface. The present disclosure describes various embodiments using terms used in some communication specifications (e.g., 3rd Generation Partnership Project (3GPP), extensible radio access network (xRAN), open radio access network (O-RAN)), but this is only an example for description. Various embodiments of the present disclosure may be easily modified and applied in other communication systems.

With the commercialization of 4^{th} generation (4G)/5^{th} generation (5G) communication systems (e.g., new radio (NR)), differentiated service support for users in virtualized networks has become required. 3GPP is a joint research project among mobile communication-related organizations aimed at developing third-generation mobile communication system standards that are globally applicable within a scope of IMT-2000 project of the International Telecommunication Union (ITU). 3GPP was established in December 1998, and 3GPP standards are based on advanced GSM standards, and encompass radio, core network, and service architecture in the scope of standardization. Accordingly, open radio access network (O-RAN) newly defines radio unit (RU), digital unit (DU), central unit (CU)-control plane (CP), and CU-user plane (CU-UP), which are nodes constitute 3GPP network entity (NE) and a base station, as O-RAN (O)-RU, O-DU, O-CU-CP, and O-CU-UP, respectively, and further standardized near-real-time (NRT) radio access network intelligent controller (RT). The present disclosure is for supporting an operator specific service model in an E2 interface in which the RIC requests a service from an O-DU, O-CU-CP, or O-CU-UP. Herein, O-RU, O-DU, O-CU-CP, and O-CU-UP may be understood as objects constituting an RAN capable of operating according to Othe -RAN standard, and may be referred to as an E2 node. An interface with the objects constituting the RAN capable of operating according to O -RAN standard between the RIC and E2 nodes utilizes E2 application protocol (E2AP).

The RIC is a logical node capable of collecting information on a cell site where a terminal and O-DU, O-CU-CP or O-CU-UP transmit and receive. The RIC may be implemented in a server format that is centrally located in one physical location. Connections between O-DU and RIC, O-CU-CP and RIC, and O-CU-UP and RIC may be established through Ethernet. To this end, an interface standard for communication between O-DU and RIC, O-CU-CP and RIC, and O-CU-UP and RIC have become necessary, and a message standard for E2-DU, E2-CU-CP, and E2-CU-UP and the definition of a procedure between RIC and O-DU, O-CU-CP, and O-CU-UP are required. In particular, differentiated service support for users is required in a virtualized network, and by centralizing call processing messages/functions generated in O-RAN to RIC, a functional definition of messages of E2-DU, E2-CU-CP, and E2-CU-UP to support services for wide cell coverage is required.

For example, the RIC may perform control of the E2 node. For example, the control may include at least one of radio bearer control of the Near-RT RIC, connected mode mobility control, dual connectivity (DC) control, carrier aggregation (CA) control, idle mode mobility control, or measurement reporting configuration. For example, the RIC may not recognize that a connection of an interface between the E2 node and a neighbor base station is disconnected. The RIC may obtain measurement reporting of a terminal served by the E2 node (e.g., an RSRP value of a target cell or A3 event information). Based on the measurement reporting, the RIC may control the terminal to perform a handover to the target cell of the neighbor base station. However, in a situation in which the connection between the E2 node and the neighbor base station is disconnected, it is difficult to accurately recognize a state of the target cell, and thus a command for the handover may not be appropriate. Referring to the above description, when the RIC does not recognize a connection status between the E2 node and a node (e.g., an AMF, a neighbor base station, a DU, a CU-UP) connected to the E2 node, the RIC may perform the control that does not reflect an actual connection status. Therefore, a device and a method according to embodiments of the present disclosure below may allow the RIC to perform the control reflecting the actual connection status by the E2 node providing the connection status between the E2 node and the node to the RIC.

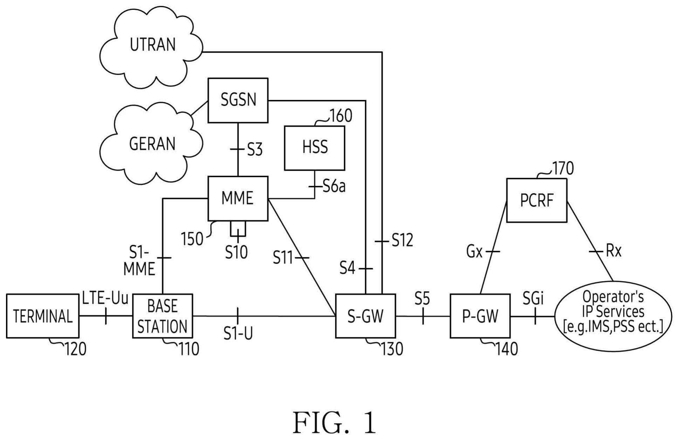

FIG. 1 illustrates an example of a 4^{th} generation (4G) long term evolution (LTE) core system.

Referring to FIG. 1, the LTE core system includes a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure that provides the terminal 120 with wireless access. For example, the base station 110 is a device that performs scheduling by collecting state information such as a buffer state, available transmission power, and a channel state of the terminal 110. The base station 110 has a coverage defined as a certain geographical area based on a distance capable of transmitting a signal. The base station 110 is connected to the MME 150 through an S1-MME interface. In addition to the base station, the base station 110 may be referred to as an 'access point (AP)', 'eNodeB (eNB)', 'wireless point', 'transmission/reception point (TRP)', or another term having an equivalent technical meaning.

The terminal 120 is a device used by a user and performs communication with the base station 110 through a wireless channel. In some cases, the terminal 120 may be operated without the user's involvement. For example, the terminal 120 which is a device performing machine type communication (MTC), may not be carried by the user. In addition to the terminal, the terminal 120 may be referred to as 'user equipment (UE)', 'mobile station', 'subscriber station', 'customer-premises equipment (CPE)', 'remote terminal', 'wireless terminal', or 'user device' or another term having an equivalent technical meaning.

The S-GW 130 provides a data bearer and creates or controls the data bearer in accordance with a control of the MME 150. For example, the S-GW 130 processes a packet arriving from the base station 110 or a packet to be forwarded to the base station 110. In addition, the S-GW 130 may serve as an anchor when handing over between base stations of the terminal 120. The P-GW 140 may function as a connection point with an external network (e.g., the Internet). In addition, the P-GW 140 assigns an Internet Protocol (IP) address to the terminal 120 and serves as an anchor for the S-GW 130. In addition, the P-GW 140 may apply a Quality of Service (QoS) policy of the terminal 120 and manage account data.

The MME 150 manages mobility of the terminal 120. In addition, the MME 150 may perform authentication, bearer management, and the like for the terminal 120. That is, the MME 150 is responsible for mobility management and various control functions for the terminal. The MME 150 may be linked with a serving GPRS support node (SGSN).

The HSS 160 stores key information and a subscriber profile for authentication of the terminal 120. The key information and the subscriber profile are transmitted from the HSS 160 to the MME 150 when the terminal 120 connects to a network.

The PCRF 170 defines a rule for a policy and charging. The stored information may be transferred from the PCRF 170 to the P-GW 140, and the P-GW 140 may perform control (e.g. QoS management, charging, and the like) for the terminal 120 based on the information provided from the PCRF 170.

A carrier aggregation (hereinafter, CA) technology is a technology that combines a plurality of component carriers and increases a frequency usage efficiency in terms of a terminal or a base station, as a terminal transmits and receives a signal using simultaneously the plurality of component carriers. Specifically, according to the CA technology, a terminal and a base station may transmit and receive a signal using a wideband by using the plurality of component carriers in an uplink (UL) and a downlink (DL), respectively. Each component carrier is located within a different frequency band. Hereinafter, the uplink refers to a communication link through which a terminal transmits a signal to a base station, and the downlink refers to a communication link through which a base station transmits a signal to a terminal. At this time, the number of uplink component carriers and downlink component carriers may be different from each other.

Dual connectivity or multi connectivity is a technology in which one terminal is connected to multiple different base stations to simultaneously transmit and receive signals using carriers in multiple base stations located in different frequency bands, thereby increasing frequency usage efficiency in terms of the terminal or base station. A terminal may be simultaneously connected to a first base station (e.g., a base station that provides a service using LTE technology or 4^{th} generation mobile communication technology) and a second base station (e.g., a base station that provides a service using new radio (NR) technology or 5^{th} generation (5G) mobile communication technology) to transmit and receive traffic. In this case, frequency resources used by each base station may be located in different bands. As described above, a method of operating based on the dual connection method of LTE and NR may be referred to as 5G non-standalone (NSA).

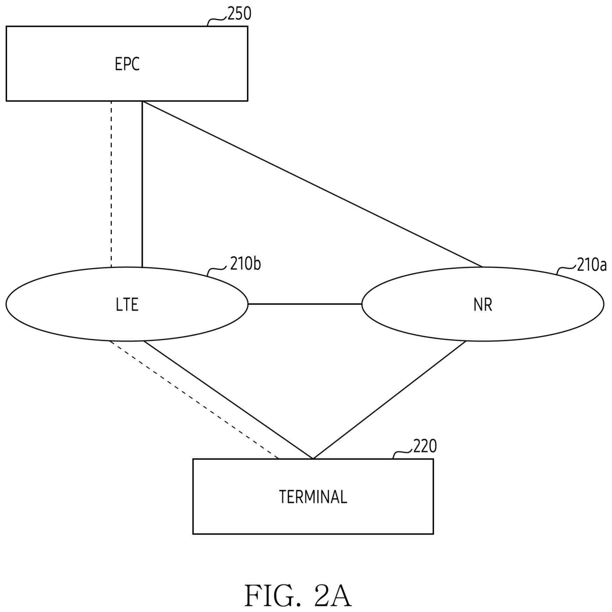

FIG. 2A illustrates an example of a 5^{th} generation (5G) non-standard alone (NSA) system.

Referring to FIG. 2A, the 5G NSA system includes an NR RAN 210a, an LTE RAN 210b, a terminal 220, and an evolved packet core (EPC) 250. The NR RAN 210a and the LTE RAN 210b may be connected to the EPC 150, and the terminal 220 may receive a service from either or both of the NR RAN 210a and the LTE RAN 210b simultaneously. The NR RAN 210a includes at least one NR base station, and the LTE RAN 210b includes at least one LTE base station. Herein, the NR base station may be referred to as a '5^{th} generation node (5G node)', 'next generation nodeB (gNB)', or another term having an equivalent technical meaning. In addition, the NR base station may have a structure separated into a central unit (CU) and a digital unit (DU), and in addition, the CU may have a structure separated into a CU-control plane (CP) unit and a CU-user plane (UP) unit.

In a structure such as FIG. 2A, the terminal 220 may perform a radio resource control (RRC) connection through a first base station (e.g., a base station belonging to the LTE RAN 210b) and may be serviced with a function (e.g., connection management, mobility management, and the like) provided in a control plane. In addition, the terminal 220 may be provided with additional radio resources for transmitting and receiving data through a second base station (e.g., a base station belonging to the NR RAN 210a). This dual connectivity technology using LTE and NR may be referred to as evolved universal terrestrial radio access (E-UTRA) - NR dual connectivity (EN-DC). Similarly, a dual connectivity technology in which the first base station uses the NR technology and the second base station uses the LTE technology is referred to as NR - E-UTRA dual connectivity (NE-DC). In addition, various embodiments may be applied to various forms of multiple connectivity and a carrier aggregation technology. In addition, various embodiments may be applied even if a first system using a first communication technology and a second system using a second communication technology are implemented in one device, or a first base station and a second base station are located in the same geographical location.

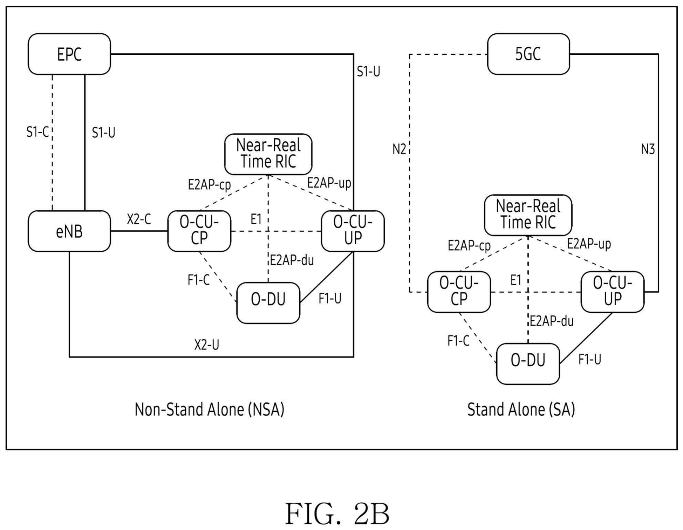

FIG. 2B illustrates an example of an architecture for an O-RAN.

For the purpose of E2-SM-key performance indicator (KPI) monitoring (KPIMON) of E2 service model, an O-RAN non-stand alone mode in a multi-connectivity operation using E-UTRA and NR radio access technology is considered, and it is assumed that the E2 node is in an O-RAN stand alone mode.

Referring to FIG. 2B, in a deployment of the O-RAN non-stand alone mode, the eNB is connected to the EPC through an S1-C/S1-U interface and to the O-CU-CP through an X2 interface. For a deployment of the O-RAN standalone mode, the O-CU-CP may be connected to a 5G core (5GC) through an N2/N3 interface.

Currently, discussions are underway for the improvement and enhancement of the initial 5G mobile communication technology by considering services that 5G mobile communication technology aimed to support, and physical layer standardization is in progress for technologies such as vehicle-to-everything (V2X), which assists autonomous vehicles in driving decisions based on the vehicle's location and status information provided by the vehicle and enhances user convenience, new radio unlicensed (NR-U), which is intended for system operation that complies with various regulatory requirements in unlicensed bands, NR terminal low power consumption technology (UE Power Saving), Non-Terrestrial Network (NTN), which is a terminal-satellite direct communication for securing coverage in areas where communication with terrestrial networks is impossible, and Positioning.

Furthermore, standardization in the field of wireless interface architecture and protocols is in progress for technologies such as Industrial Internet of Things (IIoT), which supports new services through integration and convergence with other industries, Integrated Access and Backhaul (IAB), which provides nodes to expand network service areas by integrally supporting wireless backhaul links and access links, Mobility Enhancement, which includes conditional handover and dual active protocol stack (DAPS) handover, and 2-step RACH for NR, which simplifies the random access procedure, and standardization in the field of system architecture and services is also in progress for technologies such as 5G baseline architecture (e.g., Service based Architecture, Service-based Interface) for grafting network functions virtualization (NFV) and software-defined networking (SDN) technology and mobile edge computing (MEC) on which services is provided based on a location of the terminal.

When such 5G mobile communication system is commercialized, connected devices, which are increasing explosively, will be connected to the communication network, and accordingly, it is expected that the enhancement of the functions and performance of the 5G mobile communication system and the integrated operation of connected devices will be required. To this end, new research will be conducted on eXtended Reality (XR) to efficiently support augmented reality (AR), virtual reality (VR), and mixed reality (MR), 5G performance improvement and complexity reduction utilizing artificial intelligence (AI) and machine learning (ML), AI service support, metaverse service support, and drone communication.

Furthermore, the advancement of such 5G mobile communication system could serve as the foundation for the development of technologies such as not only a new waveform to ensure coverage in the terahertz band of the 6G mobile communication technology, Multiple antenna transmission technologies such as Full dimensional MIMO (FD-MIMO), array antenna, and large-scale antenna, high-dimensional spatial multiplexing technology using metamaterial-based lenses and antennas and Orbital Angular Momentum (OAM) to improve coverage of terahertz band signals, and a Reconfigurable Intelligent Surface (RIS) technology, but also a full duplex technology, which enables the uplink and downlink to utilize simultaneously the same frequency resources, an artificial intelligence (AI)-based communication technology that realizes system optimization, by internalizing an end-to-end AI support function and utilizing satellite and AI from a design stage, and a next-generation distributed computing technology that realizes services with complexities that exceed limits of terminal computing capabilities by utilizing ultra-high-performance communication and computing resources.

Although FIGS. 1 to 2B illustrate 4G and/or 5G environments, this description does not limit the scope of the communication environments of the embodiments of the present disclosure. The technical principles according to the embodiments of the present disclosure may also be applied to 6G and post-6G communication technologies and network environments.

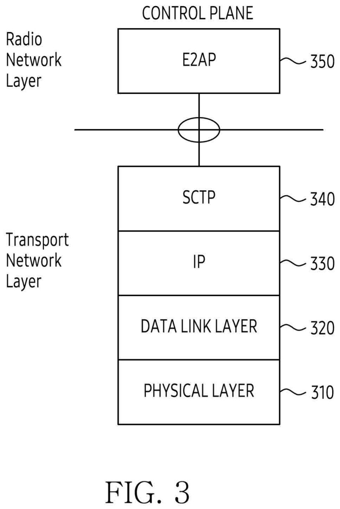

FIG. 3 illustrates an example of a protocol stack of an E2 application protocol message in a wireless access network.

Referring to FIG. 3, a control plane includes a transport network layer and a radio network layer. The transport network layer includes a physical layer 310, a data link layer 320, an internet protocol (IP) 330, and a stream control transmission protocol (SCTP) 340.

The wireless network layer includes E2AP 350. The E2AP 350 is used to transmit a subscription message, an indication message, a control message, a service update message, and a service query message, and they are transmitted in a higher layer of the SCTP 340 and the IP 330.

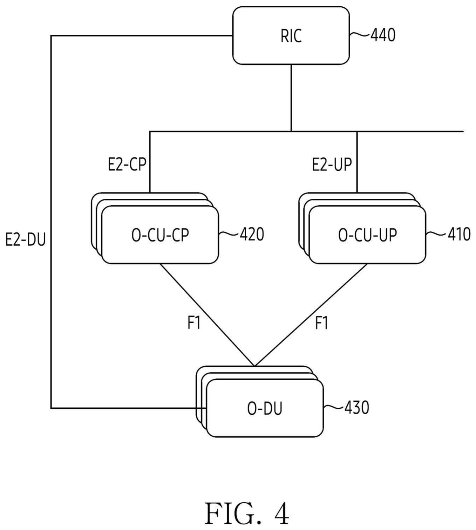

FIG. 4 illustrates an example of a connection between a base station and a radio access network intelligence controller (RIC) in a wireless access network.

Referring to FIG. 4, an RIC 440 is connected to O-CU-UP 410, O-CU-CP 420, and O-DU 430. The RIC 440 is a device for customizing RAN functionality for new services or regional resource optimization. The RIC 440 may provide functions such as network intelligence (e.g., policy enforcement, handover optimization), resource assurance (e.g., radio-link management, advanced self-organized-network (SON)), and resource control (e.g., load balancing, slicing policy). The RIC 440 may perform communication with O-CU-CP 420, O-CU-UP 410, O-DU 430. The RIC 440 may be connected to each node through E2-CP, E2-UP, E2-DU interfaces. In addition, an interface between O-CU-CP and DU, and between O-CU-UP and DU may be referred to as F1 interface. In the following description, DU and O-DU, CU-CP and O-CU-CP, CU-UP and O-CU-UP may be used interchangeably.

FIG. 4 illustrates one RIC 440, but a plurality of RICs may be present in various embodiments. The plurality of RICs may be implemented with a plurality of hardware located at the same physical location or may be implemented through virtualization using one hardware.

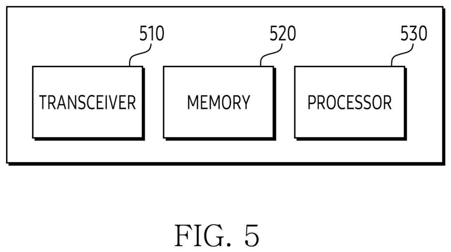

FIG. 5 illustrates an example of a configuration of a device in a wireless access network.

A structure exemplified in FIG. 5 may be understood as a configuration of a device having a function of at least one among the near-RT RIC, non-RT RIC, O-CU-CP, O-CU-UP, and O-DU of FIG. 5. The terms '...unit', '...device', and the like used below mean a unit processing at least one function or operation, and it may be implemented by hardware or software, or a combination of hardware and software.

Referring to FIG. 5, a device (or a core network device) is configured to include a transceiver 510, memory 520, and a processor 530.

The transceiver 510 provides an interface for performing communication with other devices in a network. That is, the transceiver 510 converts a bit stream transmitted from the core network device to another device into a physical signal, and converts a physical signal received from another device into a bit stream. That is, the transceiver 510 may transmit and receive a signal. Accordingly, the transceiver 510 may be referred to as a communication unit, a modem, a transmit unit, a receive unit, or a transmit/receive unit. In this case, the transceiver 510 enables the core network device to communicate with other devices or systems via a backhaul connection (e.g., a wired backhaul or a wireless backhaul) or via a network. Although only one transceiver 510 is illustrated in FIG. 5, the device may include one or more transceivers.

The memory 520 stores data such as a basic program, an application program, and setting information for operations of a device (or core network device). The memory 520 may be referred to as a storage unit. The memory 520 may be composed of a volatile memory, a nonvolatile memory, or a combination of a volatile memory and a nonvolatile memory. In addition, the memory 520 provides stored data according to a request of the processor 530.

The processor 530 controls overall operations of a network element (NE) device such as E2 node or Near-RT RIC. For example, the processor 530 transmits and receives signals through the transceiver 510. In addition, the processor 530 records and reads data in the memory 520. Although only one processor 530 is illustrated in FIG. 5, the device may include one or more processors. According to various embodiments, the processor 530 may control the device to perform operations according to various embodiments described in the present disclosure.

For example, the processor 530 may include various processing circuitry and/or a plurality of processors. For example, the term "processor" used in this document including a claim scope may include various processing circuitry including at least one processor, and at least one or more of the at least one processor may be configured to individually and/or collectively perform various functions described below in a distributed manner. As used below, when "a processor," "at least one processor," and "one or more processors" are described as being configured to perform various functions, these terms encompass situations in which, for example without limitation, one processor performs some of cited functions and another processor(s) performs other cited functions, and also situations in which one processor may perform all of the cited functions. Additionally, the at least one processor may include a combination of processors that performs, for example, enumerated/disclosed various functions in a distributed manner. The at least one processor may execute program instructions to achieve or perform various functions.

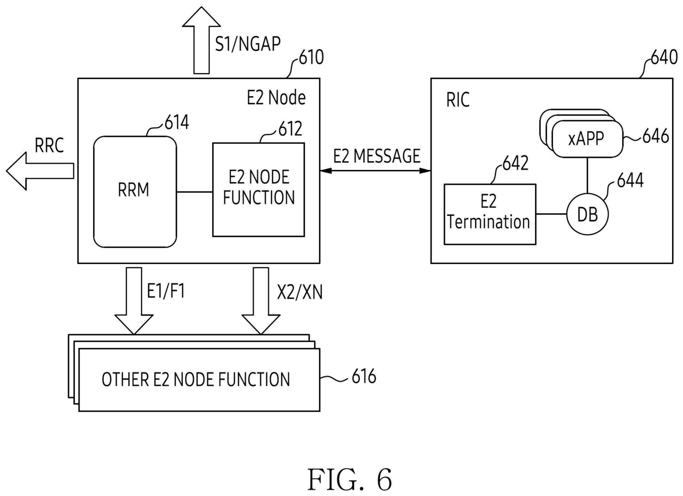

FIG. 6 illustrates an example of a logical function related to an E2 message of an E2 node and an RIC in a wireless access network. The E2 message may be understood as referring to messages transmitted through an E2 interface.

Referring to FIG. 6, an RIC 640 and an E2 node 610 may transmit or receive an E2 message between each other. For example, the E2 node 610 may be O-CU-CP, O-CU-UP, O-DU, or a base station. A communication interface of the E2 node may be determined according to a type of the E2 node 610. For example, the E2 node 610 may communicate with another E2 node 616 through an E1 interface or an F1 interface. In addition, for example, the E2 node 610 may communicate with the E2 node 616 through an X2 interface or an XN interface. In addition, for example, the E2 node 610 may perform communication through an S1 interface or a next generation application protocol (NGAP) interface (i.e., an interface between a next generation (NG) RAN node and the AMF).

The E2 node 610 may include an E2 node function 612. The E2 node function 612 corresponds to a specific application S/W (xApp) 646 installed in the RIC 640. For example, in a case of a KPI monitor, a KPI monitor collection S/W is installed in the RIC 640, and the E2 node 610 may include an E2 node function 612 that generates KPI parameters and then transmits an E2 message including the KPI parameter to an E2 termination 642 located in the RIC 640. The E2 node 610 may include a radio resource management (RRM) 614. The E2 node 610 may manage resources provided to a wireless network for a terminal.

The E2 termination 642 located in the RIC 640 is a termination of the RIC 640 for the E2 message, and performs a function of interpreting the E2 message transmitted by the E2 node 610 and then transmitting the E2 message to the xApp 646. A database DB 644 located in the RIC 640 may be used for the E2 termination 642 or the xApp 646. The E2 node 610 illustrated in FIG. 6 is a termination of at least one interface and may be understood as a termination of messages transmitted to a terminal, a peripheral base station, and a core network.

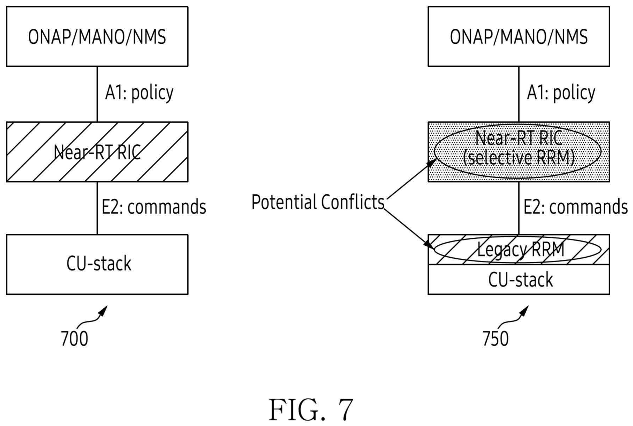

FIG. 7 illustrates examples of a function split between an E2 node and an RIC.

O-RAN standard provides a function split between an E2 node and an RIC. For example, the E2 node may be a CU. The RIC may be a Near RT RIC. The RIC may be connected to open network automation platform (ONAP)/management and orchestration (MANO)/network management system (NMS) through the A1 interface. The RIC may be connected to the E2 node through an E2 interface. The E2 interface may transmit commands. A function split option may include a function split 700 that manages the entire radio resource management (RRM) in the near-RT RIC and a function split 750 that selectively manages the RRM in the near-RT RIC.

According to the WG3 decision of the meeting on 2019/01/16, the Near-RT RIC is expected to support an E2 as an open logical interface aimed at a multi-vendor environment, regardless of the implementation of a specific RRC-RRM algorithm located in the Near-RT RIC. In the present disclosure, E2 Service Model Radio Interface Control (E2SM-RIC), which is paired with E2SM-NI capable of performing injection/modification/configuration of Per UE RRC messages for each I/F and network entity (NE), may be proposed. In other words, in the function split 750, the Near-RT RIC may be gradually improved in a direction of the function split 700. The E2 may evolve into an open logical interface, which is independent of the implementation of a specific RRC-RRM algorithm in the Near-RT RIC while targeting a multi-vendor environment.

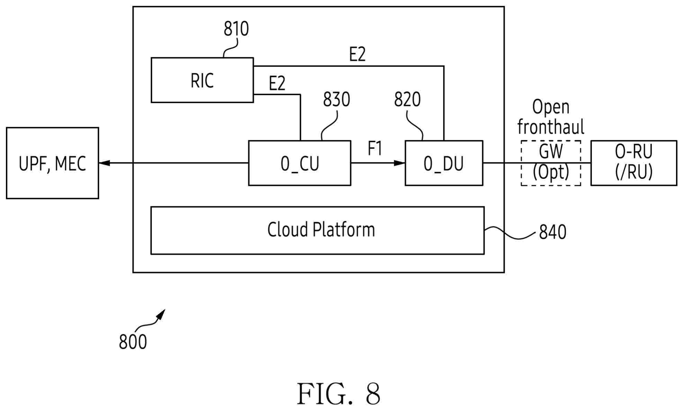

FIG. 8 illustrates an example of an implementation example of an E2 node and an RIC.

Referring to FIG. 8, in a scenario of an implementation example 800, an E2 node (e.g., the O-DU, the O-CU) and an RIC may be virtualized on a cloud platform (e.g., an open chassis and blade specification edge cloud) and configured on a device (e.g., a server). Such a scenario may support a deployment in dense urban areas with abundant fronthaul capacity that allows a BBU function to be pooled at a central location, with low latency enough to meet O-DU latency requirements. Therefore, there may be no need to attempt to centralize the Near-RT RIC beyond the limit of centralizing O-DU function. According to an embodiment, E2SM-RIC may be optimized for an O-RAN deployment scenario in which Near-RT RIC, O-CU, and O-DU are implemented on an O-Cloud platform.

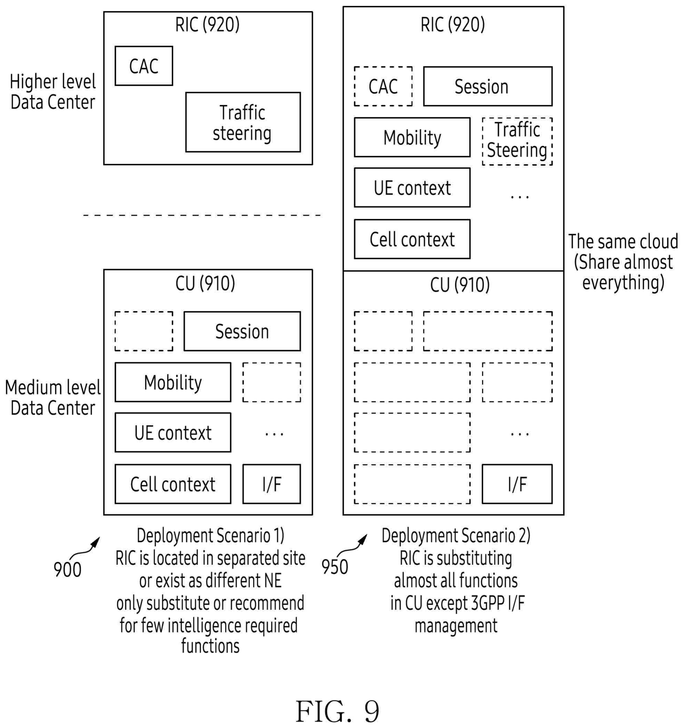

FIG. 9 illustrates examples of function split between a centralized unit (CU) 910 and an RIC 920 according to embodiments. Referring to FIG. 9, function splits may be performed according to a deployment scenario #1 (e.g., 900) or a function deployment scenario #2 (e.g., 950).

The deployment scenario #1 900: RIC is located at a separate site or exists only as another network element (NE), replacing or recommending some intelligence critical functions (e.g., traffic steering, cell admission control (CAC) function).

The deployment scenario #2 950: RIC may replace almost all functions (e.g. mobility function, session function, UE context function, cell context function) of the CU except 3GPP I/F management. In the deployment scenario #2 (e.g., 950), the RIC may be implemented as a device such as a CU (e.g., a server device). As an example, in the same cloud, the RIC may share all functions with the CU.

In FIG. 9, two scenarios are illustrated, but other scenarios may be applied. As an example, in the deployment scenario #1 900, a Mobility function may be performed by the RIC 920 rather than the CU 910. In addition, as an example, in the deployment scenario #1 900, a UE context function may be performed by the RIC rather than the CU. In addition, as an example, in the deployment scenario #1 900, a session setup function may be performed by the RIC 920 rather than the CU 910.

E2 interfaces E2AP procedures may be classified into two modules. Services through the E2AP may indicate services that an E2 node (e.g., the E2 node 610 of FIG. 6) provides to a Near-RT RIC (e.g., the RIC 640 of FIG. 6). For example, the two modules may include RIC functional procedures and global procedures. For example, a RIC functional procedures module may be used to deliver application-specific messages between applications of the Near-RT RIC and a target RAN function in the E2 node. For example, a global procedures module may include procedures that are not directly associated with a specific application.

For example, the RIC functional procedures may include a RIC subscription procedure, a RIC subscription delete procedure, a RIC subscription delete required procedure, a RIC indication procedure, a RIC control procedure, a RIC subscription modification procedure, a RIC subscription modification required procedure, and a RIC query procedure. For example, the global procedures may include an E2 setup procedure, a reset procedure, an error indication procedure, a RIC service update procedure, the E2 node configuration update procedure, an E2 connection update procedure, and an E2 removal procedure. However, embodiments of the present disclosure are not limited thereto.

For example, the E2 node may be connected to a node. For example, assume a case in which the E2 node is a CU-CP (or O-CU-CP) (e.g., the O-CU-CP 420 of FIG. 4), and the node is a DU (or an O-DU) (e.g., the O-DU 430 of FIG. 4). The E2 node may be connected to the node based on an F1 interface. For example, the E2 node and the node may establish a connection based on an F1 setup procedure. Through the F1 setup procedure, the E2 node may obtain information regarding at least one cell of the node. The E2 node may deliver information regarding the at least one cell to the Near-RT RIC through an E2 setup procedure. After the E2 setup procedure, when a connection status regarding the F1 interface between the E2 node and the node is disconnected, the Near-RT RIC may not recognize the disconnection of the connection status regarding the F1 interface. At this time, when a specific cell among the at least one cell is in a state incapable of providing a service, the Near-RT RIC may command a terminal to perform a handover to the specific cell among the at least one cell. That is, control of the E2 node and the node (e.g., another E2 node) by the Near-RT RIC that does not recognize the disconnection may not be appropriate because the control does not reflect an actual connection status of an interface. According to a device and a method according to embodiments of the present disclosure, the E2 node may provide information regarding the connection status to the Near-RT RIC, and thus the Near-RT RIC may effectively perform the control.

For example, the control may include at least one of radio bearer control of the Near-RT RIC, connected mode mobility control, dual connectivity (DC) control, carrier aggregation (CA) control, or idle mode mobility control. However, embodiments of the present disclosure are not limited thereto. For example, the control may be associated with a style (or a style type) of the Near-RT RIC.

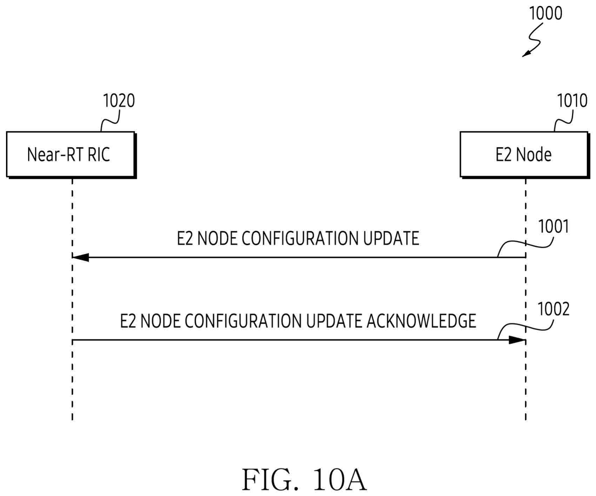

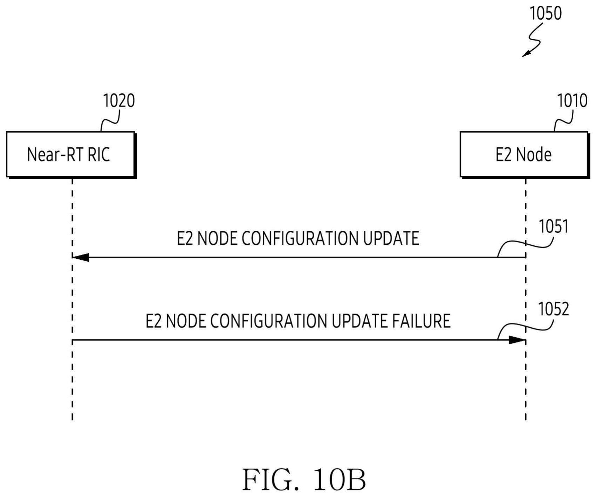

In a device and a method according to embodiments of the present disclosure, the Near-RT RIC may recognize that an interface connection between the E2 node and a node connected to the E2 node is disconnected based on the information regarding the connection status. The Near-RT RIC may perform control related to the E2 node, based on recognizing that the interface connection is disconnected. For example, the connection status between the E2 node and the node may be referred to as an E2 node component interface. For example, the E2 node component interface may include a connection status between the E2 node and an access and mobility management function (AMF), a neighbor base station (e.g., neighbor gNB), DU, or CU-UP. However, embodiments of the present disclosure are not limited thereto. Hereinafter, in FIG. 10A and FIG. 10B, an example in which the E2 node provides the information regarding the connection status to the Near-RT RIC through an E2 node configuration update procedure is described.

FIG. 10A and FIG. 10B illustrate an example of an E2 node configuration update procedure. The E2 node 1010 of FIG. 10A and FIG. 10B may include at least a portion of the E2 node 610 of FIG. 6. The Near-RT RIC 1020 of FIG. 10A and FIG. 10B may include at least a portion of the RIC 640 of FIG. 6.

Referring to FIG. 10A and FIG. 10B, examples 1000 and 1050 of the E2 node configuration update procedure are illustrated. For example, the E2 node configuration update procedure may be used to update application-level E2 node configuration data required for an E2 node 1010 and a Near-RT RIC 1020 to be correctly interoperated through an E2 interface and to support a transport network layer (TNL) association removal initiated by the E2 node 1010. However, embodiments of the present disclosure are not limited thereto.

For example, the E2 node configuration update procedure may be initiated by the E2 node 1010. For example, the E2 node configuration update procedure may use E2 support function signalling. The example 1000 of FIG. 10A illustrates a case in which the E2 node configuration update procedure is successful, and the example 1050 of FIG. 10B illustrates a case in which the E2 node configuration update procedure fails.

Referring to the example 1000 of FIG. 10A, in operation 1001, the E2 node 1010 may transmit an E2 node configuration update message to the Near-RT RIC 1020. For example, the E2 node configuration update message may include an appropriate set of latest up-to-date E2 node-related configuration data that the E2 node 1010 has just used for operation.

For example, the Near-RT RIC 1020 may update data of the application-level for the E2 node 1010, based on reception of the E2 node configuration update message. For example, when an E2 node component addition list IE is included in the E2 node configuration update message, the Near-RT RIC 1020 may add E2 node component configuration information according to the E2 node component addition list IE. Also, for example, when an E2 node update list IE (E2 node component addition list IE) is included in the E2 node configuration update message, the Near-RT RIC 1020 may modify the E2 node component configuration information according to the E2 node update list IE. Also, for example, when an E2 node component removal list IE is included in the E2 node configuration update message, the Near-RT RIC 1020 may remove the E2 node component configuration information according to the E2 node component removal list IE. The E2 node configuration information may include the E2 node component addition list IE, the E2 node update list IE, and the E2 node component removal list IE. Specific details related thereto may refer to Table 1 below.

For example, when a global E2 node ID IE is included in the E2 node configuration update message for a newly established SCTP association, the Near-RT RIC 1020 may link a TNL association with the E2 node 1010. For example, the TNL association may indicate mapping information between IP addresses of TNL endpoints or identification information (e.g., a port number, an ID).

If the E2 NODE CONFIGURATION UPDATE message includes E2 Node TNL Association To Remove List IE, and the Endpoint IP address IE and the Port Number IE for both TNL endpoints of the TNL association(s) are included in the E2 Node TNL Association To Remove List IE, the Near-RT RIC shall, if supported, consider that the TNL association(s) indicated by both received TNL endpoints will be removed by the E2 Node.

If the E2 NODE CONFIGURATION UPDATE message includes E2 Node TNL Association To Remove List IE, and the Endpoint IP address IE, or the Endpoint IP address IE and the Port Number IE for one or both of the TNL endpoints is included in the E2 Node TNL Association To Remove List IE in E2 NODE CONFIGURATION UPDATE message, the Near-RT RIC shall, if supported, consider that the TNL association(s) indicated by the received endpoint IP address(es) will be removed by the E2 Node.

In operation 1002, the Near-RT RIC 1020 may transmit an E2 node configuration update acknowledge message to the E2 node 1010. For example, the Near-RT RIC 1020 may reply the E2 node configuration update acknowledge message to the E2 node 1010 after a successful update of requested information. For example, the E2 node configuration update acknowledge message may be used to inform the E2 node 1010 that a requested update of the application-level data has been successfully performed.

According to an embodiment, when the Near-RT RIC 1020 receives the E2 node configuration update message that is without any IE except a message type IE and a transaction ID IE, the Near-RT RIC 1020 may transmit the E2 node configuration update acknowledge message without performing an update for an existing configuration.

Referring to the example 1050 of FIG. 10B, in operation 1051, the E2 node 1010 may transmit an E2 node configuration update message to the Near-RT RIC 1020. For example, the E2 node configuration update message may include an appropriate set of latest up-to-date E2 node-related configuration data that the E2 node 1010 has just used for operation.

In operation 1052, the Near-RT RIC 1020 may transmit an E2 node configuration update failure message to the E2 node 1010. For example, when the Near-RT RIC 1020 may not accept the E2 node configuration update message, the Near-RT RIC 1020 may respond the E2 node configuration update failure message with an appropriate cause value.

For example, when the E2 node configuration update failure message includes a time to wait IE, the E2 node 1010 may wait at least the indicated time before reinitiating the E2 node configuration update procedure towards the Near-RT RIC 1020.

For example, when the Near-RT RIC 1020 receives the E2 node configuration update message including an E2 node component configuration update item IE for an E2 node component that is not declared by a previously received E2 node component configuration addition item IE, the Near-RT RIC 1020 may indicate to the E2 node 1010 that the update has failed with an appropriate cause value.

For example, when the E2 node configuration update procedure fails, the Near-RT RIC 1020 and the E2 node 1010 may continue to operate with existing configuration data.

According to an embodiment, the Near-RT RIC 1020 may obtain information from the E2 node 1010 to provide (or recognize) a connection status between the E2 node 1010 and other nodes. The information regarding the connection status as described above may be included in a new IE in the E2 node configuration update message or in a new IE in another message transmitted by the E2 node 1010 to the Near-RT RIC 1020.

According to an embodiment, the Near-RT RIC 1020 may manage nodes controlled by the Near-RT RIC 1020 based on the information regarding the connection status. For example, the Near-RT RIC 1020 may perform recognition for diverse situation and may effectively control (or handle) the situations. For example, the information regarding the connection status may be used to indicate impossibility (or possibility) of service provision of a specific public land mobile network (PLMN) due to disconnection of the AMF, impossibility (or possibility) of Xn handover to a specific target cell due to disconnection of an Xn interface of a neighbor base station, unavailability (or possibility) of cells of the DU due to disconnection of an F1-C interface, or unavailability (or possibility) of a specific user plane service due to disconnection of an E1 interface of the CU-UP. For example, an example of the E2 node configuration update message including the information regarding the connection status may be defined as in the following table.

**[Table 1]**

| IE/Group Name | Presence | Range | IE type and reference | Semantics description | Criticality | Assigned Criticality |
|---|---|---|---|---|---|---|
| Message Type | M | | 9.2.3 | | YES | reject |
| Transaction ID | M | | 9.2.33 | | YES | reject |
| Global E2 Node ID | O | | 9.2.6 | Required when sent as first | YES | reject |

| | | | | message on new TNL association | | |
|---|---|---|---|---|---|---|
| E2 Node Component Configuration Addition List | | 0..1 | | | YES | reject |
| >E2 Node Component Configuration Addition Item | | 1.. <maxofE2 nodeComp onents> | | | EACH | reject |
| >>E2 Node Component Interface Type | M | | 9.2.26 | E2 Node component interface type | - | |
| >>E2 Node Component ID | M | | 9.2.32 | E2 Node Component Identifier | - | |
| >>E2 Node Component Configuration | M | | 9.2.27 | Contents depends on component type | - | |
| E2 Node Component Configuration Update List | | 0..1 | | | YES | reject |
| >E2 Node Component Configuration Update Item | | 1.. <maxofE2 nodeComp onents> | | | EACH | reject |
| >>E2 Node Component Interface Type | M | | 9.2.26 | E2 Node component interface type | - | |
| >>E2 Node Component ID | M | | 9.2.32 | E2 Node Component Identifier | - | |
| >>E2 Node Component Configuration | M | | 9.2.27 | Contents depends on component type | - | |
| E2 Node Component Configuration Removal List | | 0..1 | | | YES | reject |
| >E2 Node Component Configuration Removal Item | | 1.. <maxofE2 nodeComp onents> | | | EACH | reject |
| >>E2 Node Component Interface Type | M | | 9.2.26 | E2 Node component interface type | - | |
| >>E2 Node Component ID | M | | 9.2.32 | E2 Node Component Identifier | - | |
| E2 Node TNL Association To Remove List | | 0..1 | | | YES | reject |
| >E2 Node TNL Association To Remove Item | | 1..<maxof TNLA> | | | EACH | reject |

| IEs | | | | | | |
|---|---|---|---|---|---|---|
| >> Transport Layer Information | M | | 9.2.29 | Transport Layer Address of the E2 node. | - | - |
| >> Transport Layer Information Near-RT RIC | O | | 9.2.29 | Transport Layer Address of the Near-RT RIC. | - | - |
| E2 Node Component Interface Status List | | 0..1 | | | YES | reject |
| >E2 Node Component Interface Status Item | | 1..<maxof E2nodeCo mponents> | | | EACH | reject |
| >>E2 Node Component Interface Type | M | | 9.2.26 | E2 Node component interface type | - | |
| >>E2 Node Component ID | M | | 9.2.32 | E2 Node Component Identifier | - | |
| >>E2 Node Component Interface Connection Status | M | | ENUM(discon nected, ...) | This IE indicates that the application layer connection status of the specific E2 node component interface is disconnected. | - | |

Referring to the above table, 'M' of the table may indicate mandatory information, and 'O' may indicate optional information. However, embodiments of the present disclosure are not limited thereto. For example, in the table and tables below, IEs set as 'M' and 'O' are merely exemplary. For example, an IE set as mandatory information 'M' may be set as optional information 'O'. The Message Type may indicate information for indicating the E2 node configuration update message. The Transaction ID may indicate information for identifying the E2 node configuration update procedure between the E2 node 1010 and the Near-RT RIC 1020 among ongoing parallel procedures of a same type as the E2 node configuration update procedure. The Global E2 node ID may include global identification information of the E2 node 1010.

Also, referring to the above table, the "E2 Node Component Configuration Addition List" (or, the E2 node component configuration addition list IE) may include at least one item for addition of configuration of an E2 node component. For example, each of the at least one item may include an E2 node component interface type, an E2 node component ID, and an E2 node component configuration. Specific details regarding the E2 node component interface type and the E2 node component ID may refer to Table 3 and Table 4 below. As described above, the E2 node component configuration addition list may be used by the Near-RT RIC 1020 to add E2 node component configuration information.

Also, referring to the above table, the E2 Node Component Configuration Update List (or, the E2 node component configuration update list IE) may include at least one item for update of configuration of an E2 node component. For example, each of the at least one item may include an E2 node component interface type, an E2 node component ID, and an E2 node component configuration. Specific details regarding the E2 node component interface type and the E2 node component ID may refer to Table 3 and Table 4 below. As described above, the E2 node component configuration update list may be used by the Near-RT RIC 1020 to modify E2 node component configuration information.

Also, referring to the above table, the E2 node component configuration removal list (E2 Node Component Configuration Removal List) (or, the E2 node component configuration removal list IE) may include at least one item for configuration removal of an E2 node component. For example, each of the at least one item may include an E2 node component interface type and an E2 node component ID. Specific details regarding the E2 node component interface type and the E2 node component ID may refer to Table 3 and Table 4 below. As described above, the E2 node component configuration removal list may be used by the Near-RT RIC 1020 to remove E2 node component configuration information.

Also, referring to the above table, the E2 node TNL association to remove list (E2 Node TNL Association To Remove List) (or, the E2 node TNL association to remove list IE) may include transport layer information of the E2 node 1010 and transport layer information of the Near-RT RIC 1020. For example, the transport layer information may include a transport layer address. Also, for example, the transport layer information may include a transport layer address and a transport layer port.

According to an embodiment, the E2 node configuration update message may include an E2 node component interface status list (E2 Node Component Interface Status Item) (or the E2 node component interface status list IE). For example, the E2 node component interface status list may include at least one item for a state of an E2 node component interface. Each of the at least one item may include an E2 node component interface type, an E2 node component ID, and an E2 node component interface connection status. Specific details regarding the E2 node component interface type and the E2 node component ID may refer to Table 3 and Table 4 below. An example of the E2 node component interface connection status may refer to Table 2 below.

**[Table 2]**

| IE/Group Name | Presence | Range | IE type and reference | Semantics description |
|---|---|---|---|---|
| >>E2 Node Component | M | | ENUM(disconnected, ...) | This IE indicates that the application layer connection |
| Interface Connection Status | | | | status of the specific E2 node component interface is disconnected. |

Referring to the above table, the E2 node component interface connection status may be used to indicate that an application layer connection status of an E2 node component interface is disconnected. For example, the E2 node component interface may indicate a component interface of the E2 node 1010. For example, the E2 node component interface may be referred to as an interface connection of the E2 node 1010. For example, the component interface may include (or be referred to as) an application layer connection, a TNL association, or an SCTP (stream control transmission protocol) connection. For example, a meaning that the E2 node component interface connection status is disconnected may include that the E2 node 1010 cannot check a state of the interface connection, a state of the interface connection is released, a state of the interface connection is disabled or deactivated, or performance of the interface connection is recognized to be below a threshold value. Examples regarding the E2 node component interface type and the E2 node component ID may refer to Table 3 and Table 4 below.

**[Table 3]**

| IE/Group Name | Presence | Range | IE type and reference | Semantics description |
|---|---|---|---|---|
| E2 node component interface type | M | | ENUMERATED (ng, xn, el, f1, w1, sl, x2, ...) | |

Referring to the above table, the E2 node component interface type may be used to indicate one of an NG interface, an Xn interface, an E1 interface, an F1 interface, a W1 interface, an S1 interface, and an X2 interface. However, embodiments of the present disclosure are not limited thereto. For example, the E2 node component interface type may further include other interfaces. The E2 node component interface type may indicate a type according to a node related to the interface connection of the E2 node 1010.

**[Table 4]**

| IE/Group Name | Presence | Range | IE type and reference | Semantics description |
|---|---|---|---|---|
| CHOICE E2 node component interface type | M | | | |
| >NG | | | | |
| >>AMF name | M | | 3GPP 38.413 [19] clause 9.3.3.21 | Serving AMF |
| >Xn | | | | |
| >>Global NG-RAN Node ID | M | | 3GPP 38.423 [20] clause 9.2.2.3 | Neighbour gNB or ng-eNB |
| >E1 | | | | |
| >>gNB-CU-UP ID | M | | 3GPP 37.483 [21] clause 9.3.1.15 | |
| >F1 | | | | |
| >>gNB-DU ID | M | | 3GPP 38.473 [22] clause 9.3.1.9 | |
| >W1 | | | | |
| >>ng-eNB-DU ID | M | | 3GPP 37.473 [23] clause | |
| >S1 | | | | |
| >>MME name | M | | 3GPP 36.413 [24], clause 9.1.8.5 | Serving MME |
| >X2 | | | | |
| >>Global eNB ID | O | | 3GPP 36.423 [25] clause 9.2.22 | Neighbour eNB |
| >>Global en-gNB ID | O | | 3GPP 36.423 [25] clause 9.2.112 | Neighbour en-gNB |

Also, referring to the above table, the E2 node component interface ID may include identification information for each E2 node component interface type. For example, the E2 node component interface ID may include an AMF name for the NG interface. The AMF name may indicate identification information of a serving AMF. Also, for example, the E2 node component interface ID may include a global NG-RAN node ID for the Xn interface. The global NG-RAN node ID may indicate identification information of a neighbor gNB (or a next generation eNodeB (NG-eNB)). Also, for example, the E2 node component interface ID may include a gNB-CU-UP ID for the E1 interface. Also, for example, the E2 node component interface ID may include an ng-eNB-DU ID for the F1 interface. Also, for example, the E2 node component interface ID may include a mobility management entity (MME) ID for the S1 interface. Also, for example, the E2 node component interface ID may include at least one of a global eNB ID and a global en-gNB ID for the X2 interface. The global eNB ID may indicate identification information of a neighbor eNB, and the global en-gNB ID may indicate identification information of a neighbor en-gNB. The E2 node component interface ID may indicate identification information of a node related to the interface connection of the E2 node 1010. In the example of the above table, the E2 node component interface ID including the AMF name is exemplified, but embodiments of the present disclosure are not limited thereto. According to an embodiment, the E2 node component interface ID may further include an instance of an AMF and/or a globally unique AMF identifier (GUAMI) of the AMF. For example, when multiple TNL associations exist between the E2 node 1010 and at least one AMF, the instance and/or the GUAMI may be used to identify a TNL association related to a virtualized AMF.

As in the example of Table 1 described above, when the E2 node configuration update message includes the E2 node component interface status list IE as a separate list IE, backward compatibility may be satisfied, and thus it may be applied to an E2 node 1010 and a Near-RT RIC 1020 that are previously designed.

Referring to the above description, although an example of a separate list IE for indicating the information regarding the connection status is described for the E2 node configuration update message including the information regarding the connection status, embodiments of the present disclosure are not limited thereto. For example, another example of the E2 node configuration update message including the information regarding the connection status may be defined as in the following table.

**[Table 5]**

| IE/Group Name | Presence | Range | IE type and reference | Semantics description | Criticality | Assigned Criticality |
|---|---|---|---|---|---|---|
| Message Type | M | | 9.2.3 | | YES | reject |
| Transaction ID | M | | 9.2.33 | | YES | reject |
| Global E2 Node ID | O | | 9.2.6 | Required when sent as first message on new TNL association | YES | reject |
| E2 Node Component Configuration Addition List | | 0..1 | | | YES | reject |
| >E2 Node Component Configuration Addition Item | | 1.. <maxof E2node Compon ents> | | | EACH | reject |
| >>E2 Node Component Interface Type | M | | 9.2.26 | E2 Node component interface type | - | |
| >>E2 Node Component ID | M | | 9.2.32 | E2 Node Component Identifier | | |
| >>E2 Node Component Configuration | M | | 9.2.27 | Contents depends on component type | - | |
| E2 Node Component Configuration Update List | | 0..1 | | | YES | reject |
| >E2 Node Component Configuration Update Item | | 1.. <maxof E2node Compon ents> | | | EACH | reject |
| >>E2 Node Component Interface Type | M | | 9.2.26 | E2 Node component interface type | - | |
| >>E2 Node Component ID | M | | 9.2.32 | E2 Node Component Identifier | | |
| >>E2 Node Component Configuration | M | | 9.2.27 | Contents depends on component type | - | |
| E2 Node Component Configuration Removal List | | 0..1 | | | YES | reject |
| >E2 Node Component Configuration Removal Item | | 1.. <maxof E2node Compon ents> | | | EACH | reject |
| >>E2 Node Component Interface Type | M | | 9.2.26 | E2 Node component interface type | | |
| >>E2 Node Component ID | M | | 9.2.32 | E2 Node Component Identifier | | |
| E2 Node TNL Association To Remove List | | 0..1 | | | YES | reject |
| >E2 Node TNL Association To Remove Item IEs | | 1..<max ofTNLA > | | | EACH | reject |
| >> Transport Layer Information | M | | 9.2.29 | Transport Layer Address of the E2 node. | | |
| >> Transport Layer Information Near-RT RIC | O | | 9.2.29 | Transport Layer Address of the Near-RT RIC. | | |
| E2 Node Component Interface Status List | | 0..1 | | | YES | reject |
| >E2 Node Component Interface Status Item | | 1..<max ofE2nod eCompo nents> | | | EACH | reject |
| >>E2 Node Component Interface Connection Status | M | | ENUM(dis connected, ...) | This IE indicates that the application layer connection status of the specific E2 node component interface is disconnected. | - | |

Referring to the above table, the E2 node component interface status list of the E2 node configuration update message may include at least one item for a state of the E2 node component interface. Unlike the E2 node configuration update message of Table 1, in the example of Table 5, each of the at least one item may include the E2 node component interface connection status among the E2 node component interface type, the E2 node component ID, and the E2 node component interface connection status. At this time, the E2 node component interface type and the E2 node component ID related to the E2 node component interface connection status may use the E2 node component interface type and the E2 node component ID of other IE lists. As in the example of Table 5 described above, when the E2 node configuration update message includes the E2 node component interface status list IE as a separate list IE and the E2 node component interface status list IE includes the E2 node component interface connection status, a size of the message may be reduced while satisfying backward compatibility. In other words, an overhead of signaling between the E2 node 1010 and the Near-RT RIC 1020 may be reduced.

The E2 node configuration update message including the information regarding the connection status is described as including a separate list IE for indicating the information regarding the connection status, but embodiments of the present disclosure are not limited thereto. For example, another example of the E2 node configuration update message including the information regarding the connection status may be defined as in the following table.

**[Table 6]**

| IE/Group Name | Presence | Range | IE type and reference | Semantics description | Criticality | Assigned Criticality |
|---|---|---|---|---|---|---|
| Message Type | M | | 9.2.3 | | YES | reject |
| Transaction ID | M | | 9.2.33 | | YES | reject |
| Global E2 Node ID | O | | 9.2.6 | Required when sent as first message on new TNL association | YES | reject |
| E2 Node Component Configuration Addition List | | 0..1 | | | YES | reject |
| >E2 Node Component Configuration Addition Item | | 1.. <maxofE 2nodeCo mponents > | | | EACH | reject |
| >>E2 Node Component Interface Type | M | | 9.2.26 | E2 Node component interface type | - | |
| >>E2 Node Component ID | M | | 9.2.32 | E2 Node Component Identifier | - | |
| >>E2 Node Component Configuration | M | | 9.2.27 | Contents depends on component type | - | |
| >>E2 Node Component Interface Connection Status | M | | ENUM(dis connected, ...) | This IE indicates that the application layer connection status of the specific E2 node component interface is disconnected. | - | |
| E2 Node Component Configuration Update List | | 0..1 | | | YES | reject |
| >E2 Node Component Configuration Update Item | | 1.. <maxofE 2nodeCo mponents > | | | EACH | reject |
| >>E2 Node Component | M | | 9.2.26 | E2 Node component interface type | - | |

| Interface Type | | | | | | |
|---|---|---|---|---|---|---|
| >>E2 Node Component ID | M | | 9.2.32 | E2 Node Component Identifier | - | |
| >>E2 Node Component Configuration | M | | 9.2.27 | Contents depends on component type | - | |
| E2 Node Component Configuration Removal List | | 0..1 | | | YES | reject |
| >E2 Node Component Configuration Removal Item | | 1.. <maxofE 2nodeCo mponents > | | | EACH | reject |
| >>E2 Node Component Interface Type | M | | 9.2.26 | E2 Node component interface type | - | |
| >>E2 Node Component ID | M | | 9.2.32 | E2 Node Component Identifier | - | |
| E2 Node TNL Association To Remove List | | 0..1 | | | YES | reject |
| >E2 Node TNL Association To Remove Item IEs | | 1..<maxof TNLA> | | | EACH | reject |
| >> Transport Layer Information | M | | 9.2.29 | Transport Layer Address of the E2 node. | - | - |
| >> Transport Layer Information Near-RT RIC | O | | 9.2.29 | Transport Layer Address of the Near-RT RIC. | - | - |

Referring to the above table, the E2 node component configuration addition list of the E2 node configuration update message may include at least one item for addition of configuration of an E2 node component. For example, each of the at least one item may include an E2 node component interface type, an E2 node component ID, and an E2 node component configuration. Specific details regarding the E2 node component interface type and the E2 node component ID may refer to Table 3 and Table 4 described above. For example, each of the at least one item may further include an E2 node component interface connection status. Or, for example, another example of the E2 node configuration update message including the information regarding the connection state may be defined as in the following table.

**[Table 7]**

| IE/Group Name | Presence | Range | IE type and reference | Semantics description | Criticality | Assigned Criticality |
|---|---|---|---|---|---|---|
| Message Type | M | | 9.2.3 | | YES | reject |
| Transaction ID | M | | 9.2.33 | | YES | reject |
| Global E2 Node ID | O | | 9.2.6 | Required when sent as first message on new TNL association | YES | reject |
| E2 Node Component Configuration Addition List | | 0..1 | | | YES | reject |
| >E2 Node Component Configuration Addition Item | | 1.. <maxofE2 nodeComp onents> | | | EACH | reject |
| >>E2 Node Component Interface Type | M | | 9.2.26 | E2 Node component interface type | | |
| >>E2 Node Component ID | M | | 9.2.32 | E2 Node Component Identifier | | |
| >>E2 Node Component Configuration | M | | 9.2.27 | Contents depends on component type | - | |
| E2 Node Component Configuration Update List | | 0..1 | | | YES | reject |
| >E2 Node Component Configuration Update Item | | 1.. <maxofE2 nodeComp onents> | | | EACH | reject |
| >>E2 Node Component Interface Type | M | | 9.2.26 | E2 Node component interface type | - | |
| >>E2 Node Component ID | M | | 9.2.32 | E2 Node Component Identifier | - | |
| >>E2 Node Component Configuration | M | | 9.2.27 | Contents depends on component type | - | |
| >>E2 Node Component Interface Connection Status | M | | ENUM(disc onnected, ...) | This IE indicates that the application layer connection status of the specific E2 node component interface is disconnected. | - | |
| E2 Node Component Configuration Removal List | | 0..1 | | | YES | reject |
| >E2 Node Component Configuration Removal Item | | 1.. <maxofE2 nodeComp onents> | | | EACH | reject |
| >>E2 Node Component Interface Type | M | | 9.2.26 | E2 Node component interface type | - | |
| >>E2 Node Component ID | M | | 9.2.32 | E2 Node Component Identifier | | |
| E2 Node TNL Association To Remove List | | 0..1 | | | YES | reject |
| >E2 Node TNL Association To Remove Item IEs | | 1..<maxof TNLA> | | | EACH | reject |
| >> Transport Layer Information | M | | 9.2.29 | Transport Layer Address of the E2 node. | - | - |
| >> Transport Layer Information Near-RT RIC | O | | 9.2.29 | Transport Layer Address of the Near-RT RIC. | - | |

Referring to the above table, the E2 node component configuration update list of the E2 node configuration update message may include at least one item for update of configuration of an E2 node component. For example, each of the at least one item may include an E2 node component interface type, an E2 node component ID, and an E2 node component configuration. Specific details regarding the E2 node component interface type and the E2 node component ID may refer to Table 3 and Table 4 described above. For example, each of the at least one item may further include an E2 node component interface connection status. As in the example of Table 6 or Table 7 described above, when the E2 node configuration update message includes the E2 node component interface connection status in the E2 node component configuration addition list (or the E2 node component configuration update list), a size of the E2 node configuration update message may be reduced and a decoding number performed per IE may be decreased. In other words, an overhead of signaling between the E2 node 1010 and the Near-RT RIC 1020 and an overhead for processing of the message may be reduced. In FIG. 10A and FIG. 10B, an example in which the E2 node 1010 provides the information regarding the connection state to the Near-RT RIC 1020 through the E2 node configuration update message is described, but embodiments of the present disclosure are not limited thereto. For example, in another procedure initiated by the E2 node 1010, the information regarding the connection state may be included in a message that the E2 node 1010 transmits to the Near-RT RIC 1020. For example, the message may include at least one of a RIC subscription delete required message of the RIC subscription delete required procedure, a RIC subscription modification required message of the RIC subscription modification required procedure, a reset request message of the reset procedure, a RIC service update message of the RIC service update procedure, an E2 removal request message of the E2 removal procedure, an error indication message of the error indication procedure, and a RIC indication message of the RIC indication procedure. Or, for example, the message may be provided from the E2 node 1010 to the Near-RT RIC 1020 in an E2 interface indication procedure (or an E2 interface notification procedure) for providing the information regarding the connection state by the E2 node 1010. For example, in the E2 interface indication procedure, the E2 node 1010 may provide the message including the information regarding the connection state to the Near-RT RIC 1020 based on a designated period or a designated event being triggered. For example, the designated period may be initiated from after a connection is established through the E2 interface between the E2 node 1010 and the Near-RT RIC 1020 based on an E2 setup procedure. For example, the designated event may include that the E2 node 1010 recognizes that a connection state of an interface (e.g., an F1 interface, an Xn interface, an NG interface, and an E1 interface) between the E2 node 1010 and another node connected to the E2 node 1010 is changed (or disconnected).

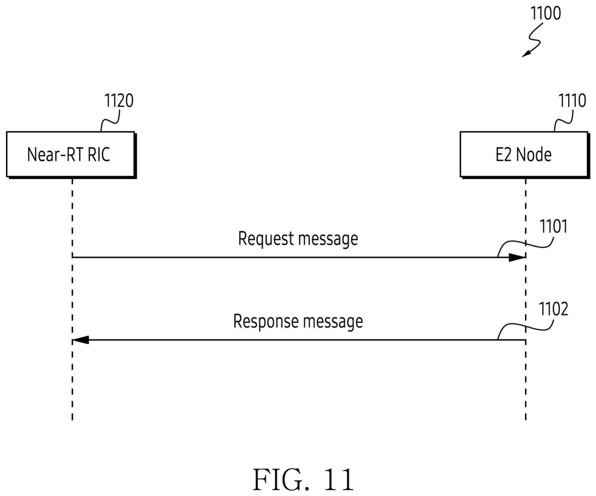

Also, for example, in another procedure initiated by the Near-RT RIC 1020, after the E2 node 1010 receives a message transmitted from the Near-RT RIC 1020, the information regarding the connection state may be included in another message that the E2 node 1010 transmits to the Near-RT RIC 1020 in response to the message. Specific details related thereto are described in FIG. 11 below.

FIG. 11 illustrates an example of signaling between an E2 node and a Near-RT RIC. The E2 node 1110 of FIG. 11 may include at least a portion of the E2 node 610 of FIG. 6. The Near-RT RIC 1120 of FIG. 11 may include at least a portion of the RIC 640 of FIG. 6.

Referring to the example 1100 of FIG. 11, in operation 1101, the Near-RT RIC 1120 may transmit a request message to the E2 node 1110. The request message may include at least one of a RIC subscription request message of the RIC subscription procedure, a RIC subscription delete request message of the RIC subscription delete procedure, a RIC control request message of the RIC control procedure, a RIC subscription modification request message of the RIC subscription modification procedure, a RIC query request message of the RIC query procedure, a reset request message of the reset procedure, an E2 connection update message of the E2 connection update procedure, and an E2 removal request message of the E2 removal request.

In operation 1102, the E2 node 1110 may transmit a response message to the Near-RT RIC 1120. For example, the response message may be transmitted in response to the request message. For example, the response message may include an acknowledge message or a failure message for a procedure initiated by the request message. For example, the response message may include at least one of a RIC subscription response message (or a RIC subscription failure message) of the RIC subscription procedure, a RIC subscription delete response message (or a RIC subscription delete failure message) of the RIC subscription delete procedure, a RIC control acknowledge message (or a RIC control failure message) of the RIC control procedure, a RIC subscription modification response message (or a RIC subscription modification failure message) of the RIC subscription modification procedure, a RIC query response message (or a RIC query failure message) of the RIC query procedure, a reset response message of the reset procedure, an E2 connection update acknowledge message (or an E2 connection update failure message) of the E2 connection update procedure, and an E2 removal response message (or an E2 removal failure message) of the E2 removal request.

According to an embodiment, the response message may include the information regarding the connection state. An example of the response message including the information regarding the connection state may be defined as in the following table.

**[Table 8]**

| IE/Group Name | Presence | Range | IE type and reference | Semantics description | Criticality | Assigned Criticality |
|---|---|---|---|---|---|---|
| Message Type | M | | 9.2.3 | | YES | reject |
| Transaction ID | M | | 9.2.33 | | YES | reject |
| ... | | | | | | |
| E2 Node Component Interface Status List | | 0..1 | | | YES | reject |
| >E2 Node Component Interface Status Item | | 1..<maxof E2nodeCo mponents > | | | EACH | reject |
| >>E2 Node Component Interface Type | M | | 9.2.26 | E2 Node component interface type | - | |
| >>E2 Node Component ID | M | | 9.2.32 | E2 Node Component Identifier | - | |
| >>E2 Node Component Interface Connection Status | M | | ENUM(dis connected, ...) | This IE indicates that the application layer connection status of the specific E2 node component interface is disconnected. | - | |

Referring to the above table, the M of the table may indicate mandatory information, and the O may indicate optional information. However, embodiments of the present disclosure are not limited thereto. For example, in the above table, IE set to M and O are merely illustrative. For example, an IE set to mandatory information (M) may also be set to optional information (O). The Message Type may indicate information for indicating the E2 node configuration update message. The Transaction ID may indicate information for identifying the specific procedure between the E2 node 1110 and the Near-RT RIC 1120 among ongoing parallel procedures of the same type.

According to an embodiment, the response message may include an E2 node component interface status list (E2 Node Component Interface Status Item) (or the E2 node component interface status list IE). For example, the E2 node component interface status list may include at least one item for a state of the E2 node component interface. Each of the at least one item may include an E2 node component interface type, an E2 node component ID, and an E2 node component interface connection status.

For example, specific details regarding the E2 node component interface type and the E2 node component ID may refer to Table 3 and Table 4 described above. Specific details regarding the E2 node component interface connection status may refer to Table 2 described above.

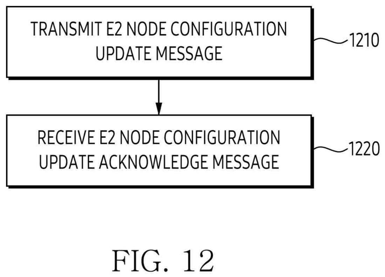

FIG. 12 illustrates an example of an operation flow for recognizing whether an interface is activated based on information indicating a connection state of an interface provided from an E2 node by the Near-RT RIC.

The E2 node of FIG. 12 may include at least a portion of the E2 node 610. For example, the E2 node may be the E2 node 1010. The Near-RT RIC of FIG. 12 may include at least a portion of the RIC 640 of FIG. 6. For example, the Near-RT RIC may be the Near-RT RIC 1020. At least a portion of the method of FIG. 12 may be performed by the E2 node. For example, at least a portion of the method may be controlled by a processor of the E2 node (e.g., the processor 530 of FIG. 5). In the following embodiment, each operation may be sequentially performed, but is not necessarily performed sequentially. For example, an order of each operation may be changed, and at least two operations may be performed in parallel.

In operation 1210, the E2 node may transmit an E2 node configuration update message. For example, the E2 node may transmit the E2 node configuration update message to the Near-RT RIC through a transceiver (e.g., the transceiver 510 of FIG. 5).

According to an embodiment, the E2 node configuration update message may include a Message Type, a Transaction ID, and a Global E2 node ID. For example, the Message Type may indicate information for indicating the E2 node configuration update message. The Transaction ID may indicate information for identifying the E2 node configuration update procedure between the E2 node and the Near-RT RIC among ongoing parallel procedures of the same type. The Global E2 node ID may include global identification information of the E2 node.

According to an embodiment, the E2 node configuration update message may include an E2 node component configuration addition list (E2 Node Component Configuration Addition List) (or the E2 node component configuration addition list IE). For example, the E2 node component configuration addition list may include at least one item for addition of configuration of an E2 node component. For example, each of the at least one item may include an E2 node component interface type, an E2 node component ID, and an E2 node component configuration. Specific details regarding the E2 node component interface type and the E2 node component ID may refer to Table 3 and Table 4 described above. As described above, the E2 node component configuration addition list may be used by the Near-RT RIC to add E2 node component configuration information.

According to an embodiment, the E2 node configuration update message may include an E2 node component configuration update list (E2 Node Component Configuration Update List) (or the E2 node component configuration update list IE). For example, the E2 node component configuration update list may include at least one item for update of configuration of an E2 node component. For example, each of the at least one item may include an E2 node component interface type, an E2 node component ID, and an E2 node component configuration. Specific details regarding the E2 node component interface type and the E2 node component ID may refer to Table 3 and Table 4 described above. As described above, the E2 node component configuration update list may be used by the Near-RT RIC to modify E2 node component configuration information.

According to an embodiment, the E2 node configuration update message may include an E2 node component configuration removal list (E2 Node Component Configuration Removal List) (or the E2 node component configuration removal list IE). For example, the E2 node component configuration removal list may include at least one item for configuration removal of an E2 node component. For example, each of the at least one item may include an E2 node component interface type and an E2 node component ID. Specific details regarding the E2 node component interface type and the E2 node component ID may refer to Table 3 and Table 4 described above. As described above, the E2 node component configuration removal list may be used by the Near-RT RIC to remove E2 node component configuration information.

According to an embodiment, the E2 node configuration update message may include an E2 node TNL association to remove list (E2 Node TNL Association To Remove List) (or the E2 node TNL association to remove list IE). For example, the E2 node TNL association to remove list may include transport layer information of the E2 node and transport layer information of the Near-RT RIC. For example, the transport layer information may include a transport layer address. Also, for example, the transport layer information may include a transport layer address and a transport layer port.

According to an embodiment, the E2 node configuration update message may include an E2 node component interface connection status. For example, the E2 node component interface connection status may represent information indicating that an interface connection between the E2 node and a node is disconnected. For example, an example regarding the E2 node component interface connection status may refer to Table 2 described above. A specific example regarding the E2 node configuration update message including the information may refer to Table 5 described above.

According to an embodiment, the interface connection may include at least one of an NG interface, an Xn interface, an E1 interface, an F1 interface, a W1 interface, an S1 interface, and an X2 interface. According to an embodiment, the node may include at least one of an access and mobility management function (AMF), an next generation (NG)- radio access network (RAN), a gNodeB-centralized unit-user plane (gNB-CU-UP), a gNB-distributed unit (DU), an NG-eNodeB (eNB)-DU, a mobility management entity (MME), and an eNB.

According to an embodiment, the E2 node configuration update message may include an E2 node component interface status list (E2 Node Component Interface Status Item) (or the E2 node component interface status list IE). For example, the E2 node component interface status list may include at least one item for a state of the E2 node component interface. Each of the at least one item may include an E2 node component interface type, an E2 node component ID, and the E2 node component interface connection status. A specific example regarding the E2 node configuration update message including the information may refer to Table 1 described above.

According to an embodiment, the E2 node configuration update message may include a configuration addition list (or an E2 node component configuration addition list). The configuration addition list may include at least one item for addition of configuration of an E2 node component. For example, each of the at least one item may include an E2 node component interface type, an E2 node component ID, and an E2 node component configuration. Specific details regarding the E2 node component interface type and the E2 node component ID may refer to Table 3 and Table 4 described above. For example, each of the at least one item may further include the E2 node component interface connection status (or the information). A specific example regarding the E2 node configuration update message including the information may refer to Table 6 described above.

According to an embodiment, the E2 node configuration update message may include a configuration update list (or an E2 node component configuration update list). The configuration update list may include at least one item for update of configuration of an E2 node component. For example, each of the at least one item may include an E2 node component interface type, an E2 node component ID, and an E2 node component configuration. Specific details regarding the E2 node component interface type and the E2 node component ID may refer to Table 3 and Table 4 described above. For example, each of the at least one item may further include the E2 node component interface connection status (or the information). A specific example regarding the E2 node configuration update message including the information may refer to Table 7 described above.

According to an embodiment, the E2 node component interface connection status (or the information) may be provided for radio bearer control, connected mode mobility control, dual connectivity (DC) control, carrier aggregation (CA) control, or idle mode mobility control of the Near-RT RIC. However, embodiments of the present disclosure are not limited thereto. For example, the control may be related to a style (or a style type) of the Near-RT RIC.

In operation 1220, the E2 node may receive an E2 node configuration update acknowledge message from the Near-RT RIC. For example, the E2 node may receive the E2 node configuration update acknowledge message, in response to the E2 node configuration update message. For example, the E2 node configuration update acknowledge message may be used to inform the E2 node that the requested update of the application-level data has been successfully performed.

According to a device and a method according to embodiments of the present disclosure, the E2 node may provide the E2 node component interface connection status (or the information) to the Near-RT RIC. The Near-RT RIC may, based on the information, recognize an interface connection state between the E2 node and other nodes and effectively control (or handle) the E2 node and the other nodes.

As described above, an apparatus for an E2 node may comprise at least one processor. The apparatus may comprise memory including instructions. The instructions, when executed by the at least one processor individually or collectively, may cause the E2 node to transmit, to a near-real time radio access network intelligence controller (Near-RT RIC), an E2 node configuration update message. The instructions, when executed by the at least one processor individually or collectively, may cause the E2 node to receive, from the Near-RT RIC, an E2 node configuration update acknowledge message in response to the E2 node configuration update message. The E2 node configuration update message may include information indicating that an interface connection between the E2 node and a node is disconnected.

According to an embodiment, the E2 node configuration update message may include an interface status list of the E2 node. The interface connection list may include one or more items. Each of the one or more items may include a type of the interface connection, identification information of the node according to the type, and the information.

According to an embodiment, the E2 node configuration update message may further include a configuration addition list, a configuration update list, a configuration removal list, and a transport network layer (TNL) association removal list.

According to an embodiment, the interface connection may comprise at least one of NG interface, Xn interface, E1 interface, F1 interface, W1 interface, S1 interface, or X2 interface. The node may comprise at least one of access and mobility management function (AMF), next generation (NG)-radio access network (RAN), gNodeB (gNB)-centralized unit (CU)-user plane (UP), gNB-distributed unit (DU), NG-eNodeB (eNB)-DU, mobility management entity (MME), or eNB.

According to an embodiment, the E2 node configuration update message may include a configuration addition list. The configuration addition list may include one or more items. Each of the one or more items may include a type of the interface connection, identification information of the node according to the type, and the information.

According to an embodiment, the E2 node configuration update message may include a configuration update list. The configuration update list may include one or more items. Each of the one or more items may include a type of the interface connection, identification information of the node according to the type, and the information.

According to an embodiment, the information indicating that the interface connection is disconnected may be provided for radio bearer control, connected mode mobility control, dual connectivity (DC) control, carrier aggregation (CA) control, or idle mode mobility control of the Near-RT RIC.

As described above, an apparatus for a near-real time radio access network intelligence controller (Near-RT RIC) may comprise at least one processor. The apparatus may comprise memory including instructions. The instructions, when executed by the at least one processor individually or collectively, may cause the Near-RT RIC to receive, from an E2 node, an E2 node configuration update message. The instructions, when executed by the at least one processor individually or collectively, may cause the Near-RT RIC to transmit, to the E2 node, an E2 node configuration update acknowledge message, in response to the E2 node configuration update message. The E2 node configuration update message may include information indicating that an interface connection between the E2 node and a node is disconnected.

According to an embodiment, the E2 node configuration update message may include an interface status list of the E2 node. The interface connection list may include one or more items. Each of the one or more items may include a type of the interface connection, identification information of the node according to the type, and the information.

According to an embodiment, the E2 node configuration update message may further include a configuration addition list, a configuration update list, a configuration removal list, and a transport network layer (TNL) association removal list.

According to an embodiment, the interface connection may comprise at least one of NG interface, Xn interface, E1 interface, F1 interface, W1 interface, S1 interface, or X2 interface. The node may comprise at least one of access and mobility management function (AMF), next generation (NG)-radio access network (RAN), gNodeB (gNB)-centralized unit (CU)-user plane (UP), gNB-distributed unit (DU), NG-eNodeB (eNB)-DU, mobility management entity (MME), or eNB.

According to an embodiment, the E2 node configuration update message may include a configuration addition list. The configuration addition list may include one or more items. Each of the one or more items may include a type of the interface connection, identification information of the node according to the type, and the information.

According to an embodiment, the E2 node configuration update message may include a configuration update list. The configuration update list may include one or more items. Each of the one or more items may include a type of the interface connection, identification information of the node according to the type, and the information.

According to an embodiment, the information indicating that the interface connection is disconnected may be provided for radio bearer control, connected mode mobility control, dual connectivity (DC) control, carrier aggregation (CA) control, or idle mode mobility control of the Near-RT RIC.

As described above, a method performed by an apparatus for an E2 node may comprise transmitting, to a near-real time radio access network intelligence controller (Near-RT RIC), an E2 node configuration update message. The method may comprise receiving, from the Near-RT RIC, an E2 node configuration update acknowledge message, in response to the E2 node configuration update message. The E2 node configuration update message may include information indicating that an interface connection between the E2 node and a node is disconnected.

According to an embodiment, the E2 node configuration update message may include an interface status list of the E2 node. The interface connection list may include one or more items. Each of the one or more items may include a type of the interface connection, identification information of the node according to the type, and the information.

According to an embodiment, the E2 node configuration update message may further include a configuration addition list, a configuration update list, a configuration removal list, and a transport network layer (TNL) association removal list.

According to an embodiment, the interface connection may comprise at least one of NG interface, Xn interface, E1 interface, F1 interface, W1 interface, S1 interface, or X2 interface. The node may comprise at least one of access and mobility management function (AMF), next generation (NG)-radio access network (RAN), gNodeB (gNB)-centralized unit (CU)-user plane (UP), gNB-distributed unit (DU), NG-eNodeB (eNB)-DU, mobility management entity (MME), or eNB.

According to an embodiment, the E2 node configuration update message may include a configuration addition list or a configuration update list. The configuration addition list or the configuration update list may include one or more items. Each of the one or more items may include a type of the interface connection, identification information of the node according to the type, and the information.

As described above, a non-transitory computer-readable storage medium, when individually or collectively executed by a processor of an apparatus of an E2 node, may store one or more programs including instructions that cause to transmit, to a near-real time radio access network intelligence controller (Near-RT RIC), an E2 node configuration update message. The non-transitory computer-readable storage medium, when individually or collectively executed by the processor, may store one or more programs including instructions that cause to receive, from the Near-RT RIC, an E2 node configuration update acknowledge message, in response to the E2 node configuration update message. The E2 node configuration update message may include information indicating that an interface connection between the E2 node and a node is disconnected.

A method performed by an apparatus of a near-real time radio access network intelligence controller (Near-RT RIC) may comprise receiving, from an E2 node, an E2 node configuration update message. The method may comprise transmitting, to the E2 node, an E2 node configuration update acknowledge message, in response to the E2 node configuration update message. The E2 node configuration update message may include information indicating that an interface connection between the E2 node and a node is disconnected.

A non-transitory computer-readable storage medium, when individually or collectively executed by at least one processor of an apparatus of a near-real time radio access network intelligence controller (Near-RT RIC), may store one or more programs including instructions that cause the Near-RT RIC to receive, from an E2 node, an E2 node configuration update message. The non-transitory computer-readable storage medium, when individually or collectively executed by the at least one processor, may store one or more programs including instructions that cause the Near-RT RIC to transmit, to the E2 node, an E2 node configuration update acknowledge message, in response to the E2 node configuration update message. The E2 node configuration update message may include information indicating that an interface connection between the E2 node and a node is disconnected.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. An apparatus for an E2 node comprising:
at least one processor; and
memory including instructions,
wherein the instructions, when executed by the at least one processor individually or collectively, cause the E2 node to:
transmit, to a near-real time radio access network intelligence controller (Near-RT RIC), an E2 node configuration update message; and
receive, from the Near-RT RIC, an E2 node configuration update acknowledge message in response to the E2 node configuration update message, and
wherein the E2 node configuration update message includes information indicating that an interface connection between the E2 node and a node is disconnected.

2. The apparatus of claim 1,
wherein the E2 node configuration update message includes an interface status list of the E2 node,
wherein the interface connection list includes one or more items, and
wherein each of the one or more items includes:
a type of the interface connection,
identification information of the node according to the type, and
the information.

3. The apparatus of claim 2,
wherein the E2 node configuration update message further includes a configuration addition list, a configuration update list, a configuration removal list, and a transport network layer (TNL) association removal list.

4. The apparatus of claim 1,
wherein the interface connection comprises at least one of NG interface, Xn interface, E1 interface, F1 interface, W1 interface, S1 interface, or X2 interface, and
wherein the node comprises at least one of access and mobility management function (AMF), next generation (NG)-radio access network (RAN), gNodeB (gNB)-centralized unit (CU)-user plane (UP), gNB-distributed unit (DU), NG-eNodeB (eNB)-DU, mobility management entity (MME), or eNB.

5. The apparatus of claim 1,
wherein the E2 node configuration update message includes a configuration addition list,
wherein the configuration addition list includes one or more items, and
wherein each of the one or more items includes:
a type of the interface connection,
identification information of the node according to the type, and
the information.

6. The apparatus of claim 1,
wherein the E2 node configuration update message includes a configuration update list, wherein the configuration update list includes one or more items, and
wherein each of the one or more items includes:
a type of the interface connection,
identification information of the node according to the type, and
the information.

7. The apparatus of claim 1,
wherein the information indicating that the interface connection is disconnected is provided for radio bearer control, connected mode mobility control, dual connectivity (DC) control, carrier aggregation (CA) control, or idle mode mobility control of the Near-RT RIC.

8. An apparatus for a near-real time radio access network intelligence controller (Near-RT RIC) comprising:
at least one processor; and
memory including instructions,
wherein the instructions, when executed by the at least one processor individually or collectively, cause the Near-RT RIC to:
receive, from an E2 node, an E2 node configuration update message; and
transmit, to the E2 node, an E2 node configuration update acknowledge message, in response to the E2 node configuration update message, and
wherein the E2 node configuration update message includes information indicating that an interface connection between the E2 node and a node is disconnected.

9. The apparatus of claim 8,
wherein the E2 node configuration update message includes an interface status list of the E2 node,
wherein the interface connection list includes one or more items, and
wherein each of the one or more items includes:
a type of the interface connection,
identification information of the node according to the type, and
the information.

10. The apparatus of claim 9,
wherein the E2 node configuration update message further includes a configuration addition list, a configuration update list, a configuration removal list, and a transport network layer (TNL) association removal list.

11. The apparatus of claim 8,
wherein the interface connection comprises at least one of NG interface, Xn interface, E1 interface, F1 interface, W1 interface, S1 interface, or X2 interface, and
wherein the node comprises at least one of access and mobility management function (AMF), next generation (NG)-radio access network (RAN), gNodeB (gNB)-centralized unit (CU)-user plane (UP), gNB-distributed unit (DU), NG-eNodeB (eNB)-DU, mobility management entity (MME), or eNB.

12. The apparatus of claim 8,
wherein the E2 node configuration update message includes a configuration addition list,
wherein the configuration addition list includes one or more items, and
wherein each of the one or more items includes:
a type of the interface connection,
identification information of the node according to the type, and
the information.

13. The apparatus of claim 8,
wherein the E2 node configuration update message includes a configuration update list,
wherein the configuration update list includes one or more items, and
wherein each of the one or more items includes:
a type of the interface connection,
identification information of the node according to the type, and
the information.

14. A method performed by an apparatus for an E2 node, the method comprising:
transmitting, to a near-real time radio access network intelligence controller (Near-RT RIC), an E2 node configuration update message; and
receiving, from the Near-RT RIC, an E2 node configuration update acknowledge message, in response to the E2 node configuration update message,
wherein the E2 node configuration update message includes information indicating that an interface connection between the E2 node and a node is disconnected.

15. A non-transitory computer-readable storage medium, when executed by a processor of an apparatus for an E2 node individually or collectively, stores one or more programs including instructions that cause the apparatus to:
transmit, to a near-real time radio access network intelligence controller (Near-RT RIC), an E2 node configuration update message; and
receive, from the Near-RT RIC, an E2 node configuration update acknowledge message, in response to the E2 node configuration update message,
wherein the E2 node configuration update message includes information indicating that an interface connection between the E2 node and a node is disconnected.
